# EUROPÄISCHE PATENTSCHRIFT

(11) **EP 2 414 262 B1**
(45) Veröffentlichungstag und Bekanntmachung des Hinweises auf die Patenterteilung: **30.04.2014**
(21) Anmeldenummer: 11711469.4
(22) Anmeldetag: 24.03.2011
(51) Int. Cl.: B65G 43/10, B65G 47/84

(54) **VERFAHREN ZUM ÜBERGEBEN EINES ARTIKELS VON EINER ERSTEN AN EINE ZWEITE FÖRDEREINRICHTUNG**
METHOD FOR TRANSFERRING AN ARTICLE FROM A FIRST CONVEYING APPARATUS TO A SECOND CONVEYING APPARATUS
PROCÉDÉ PERMETTANT DE TRANSFÉRER UN ARTICLE D'UN PREMIER À UN SECOND DISPOSITIF DE TRANSPORT

(30) Priorität: 29.04.2010 DE 102010028383
(43) Veröffentlichungstag der Anmeldung: 08.02.2012
(73) Patentinhaber: Krones AG, 93073 Neutraubling (DE)
(72) Erfinder: DAVIDSON, Hartmut, 93197 Zeitlam (DE)
(74) Vertreter: Grünecker, Kinkeldey, Stockmair & Schwanhäusser
(86) Internationale Anmeldenummer: PCT/EP2011/001486
(87) Internationale Veröffentlichungsnummer: WO 2011/134576

(56) Entgegenhaltungen:
- DE-U1- 29 724 903
- US-A- 1 604 440

## Beschreibung

Die vorliegende Erfindung betrifft ein Verfahren zum Übergeben eines Artikels von einer ersten Fördereinrichtung an eine zweite Fördereinrichtung, wobei wenigstens eine Fördereinrichtung wenigstens einen Motor aufweist.

Ein Transfermechanismus für Elaschenabfüllanlager mit den Merkmalen des Oberbegriffs des Anspruchs 9 ist beispielsweise aus der US 1,604,440 bekannt.

Insbesondere in der Getränkeindustrie ist es häufig erforderlich, Artikel, beispielsweise Flaschen, von einer Behandlungseinheit an eine zweite Behandlungseinheit zu übergeben. Diese Übergaben können beispielsweise mittels eines oder mehrerer Transfersterne geschehen.

Die Übergaben müssen dabei möglichst exakt eingestellt werden, da sich sonst die Artikel im Bereich der Übergaben verklemmen können, und dabei eine hohe Kraft auf die Artikel wirkt oder der Transport unruhig läuft beziehungsweise die Klammern und Führungen von zur Übergabe verwendeten Fördereinrichtungen eine starke Abnutzung erfahren.

Üblicherweise wird die Einstellung der Übergabe optisch vorgenommen, d.h. die relative Positionierung oder Ausrichtung der zur Übergabe verwendeten Fördereinrichtungen wird durch eine Bedienperson im Stillstand der Maschine vorgenommen.

Diese Vorgehensweise hat jedoch den Nachteil, dass sie sehr zeitaufwändig ist und nicht immer zu zufriedenstellenden Ergebnissen führt. Außerdem herrschen in der Produktion andere dynamische Verhältnisse vor, welche zu unpräzisen Übergaben führen können. Auch durch Verschleiß können sich die Übergaben während der Produktion ändern.

Daher ist es Aufgabe der vorliegenden Erfindung, ein Verfahren bereitzustellen, welches ein besseres Einstellen einer Übergabe eines Artikels von einer ersten Fördereinrichtung an eine zweite Fördereinrichtung ermöglicht. Dieses Problem wird durch ein Verfahren gemäß Patentanspruch 1 gelöst.

Die vorliegende Erfindung nutzt die Erkenntnis, dass sich die Last eines Motors einer Fördereinrichtung in Abhängigkeit von der relativen Positionierung der Fördereinrichtungen, also in Abhängigkeit von der Einstellung der Übergabe, ändert. Dadurch, dass die relative Positionierung der Fördereinrichtungen zueinander abhängig von einer erfassten Last angepasst wird, ermöglicht das vorliegende Verfahren, eine präzisere Einstellung einer Übergabe eines Artikels von einer ersten Fördereinrichtung an eine zweite Fördereinrichtung.

Der zu übergebende Artikel kann insbesondere ein Behälter, beispielsweise eine Flasche oder eine Dose, sein.

Bei der ersten und/oder zweiten Fördereinrichtung bzw. Übergabeeinrichtung kann es sich jeweils um einen Einlaufstern, einen Ablaufstern oder einen Transferstern, insbesondere einer Abfüllanlage in der Getränkeindustrie, handeln. Beispielsweise kann die erste Fördereinrichtung ein zwischen zwei Behandlungseinrichtungen eines Artikels angeordneter Transferstern und die zweite Fördereinrichtung ein Einlauf- oder Ablaufstern einer der Behandlungseinrichtungen sein.

Die erste und/oder zweite Fördereinrichtung können aber auch mehrere Förderelemente, beispielsweise mehrere Transportsterne, umfassen. Beispielsweise können die erste und/oder zweite Fördereinrichtung ein Karussell und/oder einen Ablaufstern und/oder einen Einlaufstern umfassen. In diesem Fall kann das Anpassen der relativen Positionierung ein Anpassen oder Verändern der relativen Position wenigstens eines Förderelements der ersten und/oder zweiten Fördereinrichtung umfassen oder ein Anpassen oder Verändern der relativen Position wenigstens eines Förderelements der ersten und/oder zweiten Fördereinrichtung entsprechen.

Insbesondere kann jedes Förderelement der ersten und/oder zweiten Fördereinrichtung einen eigenen Motor, insbesondere einen Servomotor, umfassen.

Die erste und/oder zweite Fördereinrichtung umfassen Halteelemente, insbesondere Greifer oder Klammern, zum Haltern der zu übergebenden Artikel. Das Übergeben eines Artikels von einer ersten Fördereinrichtung an eine zweite Fördereinrichtung kann dabei ein Lösen eines Halteelementes der ersten Fördereinrichtung und ein Schließen eines Halteelementes der zweiten Fördereinrichtung umfassen. Während der Übergabe kann der Artikel temporär auch von einem Halteelement der ersten Fördereinrichtung und von einem Halteelement der zweiten Fördereinrichtung gehalten oder fixiert werden.

Der wenigstens eine Motor kann ein lagegeregelter Motor sein. Der wenigstens eine Motor kann insbesondere ein Servoantrieb oder Servomotor sein. Unter einem Servoantrieb versteht man einen elektronisch geregelten elektrischen Motor mit Lage, Geschwindigkeits- und/oder Momentenregelung.

Das Erfassen der Last kann ein Bestimmen eines Drehmoments des wenigstens einen Motors umfassen. Insbesondere wenn der wenigstens eine Motor ein Servomotor ist, kann das Drehmoment sehr genau erfasst werden.

Es können sowohl die erste Fördereinrichtung als auch die zweite Fördereinrichtung jeweils wenigstens einen Motor umfassen. In diesem Fall kann das Erfassen der Last ein Erfassen der Last, insbesondere ein Bestimmen eines Drehmoments, des wenigstens einen Motors der ersten Fördereinrichtung und ein Erfassen der Last, insbesondere ein Bestimmen eines Drehmoments, des wenigstens einen Motors der zweiten Fördereinrichtung umfassen. Das Erfassen der Last kann auch ein Erfassen einer Gesamtlast, insbesondere ein Bestimmen eines Gesamtdrehmoments, mehrerer oder aller Motoren der ersten und der zweiten Fördereinrichtung umfassen. Das Gesamtdrehmoment kann dann also der Summe des Drehmoments des wenigstens einen Motors der ersten Fördereinrichtung und des Drehmoments des wenigstens einen Motors der zweiten Fördereinrichtung entsprechen.

Das Anpassen der relativen Positionierung kann ein Minimieren der Last des wenigstens einen Motors umfassen. Insbesondere kann das Anpassen der relativen Positionierung ein Minimieren des Drehmoments umfassen. Erfindungsgemäß wird dabei ausgenutzt, dass eine schlecht eingestellte Übergabe eine Erhöhung des Drehmoments hervorruft. Ein Minimieren der Last, insbesondere des Drehmoments, des wenigstens einen Motors kann daher zu einer besser eingestellten Übergabe führen.

Insbesondere kann das Anpassen der relativen Positionierung ein weiteres Erfassen einer Last, insbesondere eines Drehmoments, des wenigstens einen Motors umfassen. Das Anpassen der relativen Positionierung kann ein Verstellen der Positionierung der ersten und/oder zweiten Fördereinrichtung umfassen. Durch ein wiederholtes Verstellen der Positionierung in Kombination mit dem Erfassen der Last beziehungsweise des Drehmoments kann ein Minimum der Last bestimmt werden. Das durch das Anpassen bestimmte Minimum kann insbesondere einem lokalen Minimum entsprechen.

Das Anpassen der Positionierung der ersten und/oder zweiten Fördereinrichtung umfasst ein Verändern der Position der ersten und/oder zweiten Fördereinrichtung. Die Änderung der Position ist kleiner als ein Teilungsabschnitt (eine Teilung), insbesondere kleiner als 1% eines Teilungsabschnitts (einer Teilung).

Durch das Anpassen der Positionierung wird ein Übergabepunkt eingestellt.

Das Anpassen der relativen Positionierung kann teilweise oder vollständig automatisch durchgeführt werden. Das Anpassen kann beispielsweise durch einen automatischen Regelkreis oder durch eine Bedienperson, der die erfasste Last auf einer Anzeigevorrichtung angezeigt wird, geschehen.

Vor dem Schritt des Erfassens einer Last kann die relative Positionierung der ersten Fördereinrichtung zur zweiten Fördereinrichtung durch eine Bedienperson eingestellt werden. Dieser Einstellschritt kann eine grobe visuelle Einstellung sein. Das Anpassen der relativen Positionierung abhängig von der erfassten Last kann dann einer Feineinstellung der relativen Positionierung entsprechen.

Der Schritt des Erfassens einer Last kann kontinuierlich oder in vorherbestimmten zeitlichen Abständen durchgeführt werden. Das Verfahren kann also ein Überwachen der Last des wenigstens einen Motors umfassen.

Der Schritt des Anpassens der relativen Positionierung abhängig von der erfassten Last kann in vorherbestimmten zeitlichen Abständen oder in Reaktion auf eine Veränderung der Last des wenigstens einen Motors, insbesondere in Reaktion auf eine Vergrößerung der Last des wenigstens einen Motors, durchgeführt werden. Dadurch ist es möglich, eine optimierte Einstellung der Übergabe während des Betriebs zu gewährleisten.

Insbesondere kann der Schritt des Anpassens in diesem Fall dann durchgeführt werden, wenn eine Vergrößerung der Last erfasst wird, insbesondere eine Vergrößerung der Last um einen vorherbestimmten Betrag oder Bruchteil, beispielsweise um 2% bis 8%, insbesondere um 5%.

In diesem Fall kann der Schritt des Anpassens also entfallen, solange die Last auf einem, insbesondere lokalen, Minimum bleibt.

Das Verfahren kann außerdem ein Speichern angepasster Parameterwerte der ersten und/oder zweiten Fördereinrichtung, die durch das Anpassen der relativen Positionierung erhalten wurden, umfassen. Mit anderen Worten kann durch ein oben beschriebenes Verfahren eine Übergabe eines Artikels von einer ersten Fördereinrichtung an eine zweite Fördereinrichtung optimiert werden, und die optimierten Parameterwerte, welche die relative Positionierung der ersten Fördereinrichtung zur zweiten Fördereinrichtung beschreiben, können daraufhin, beispielsweise in einer Parametertabelle, gespeichert werden. Diese Parameter können dann während der laufenden Produktion verwendet werden. Mit anderen Worten kann die Positionierung der Fördereinrichtungen während der Produktion auf die gespeicherten Parameterwerte eingestellt werden.

Die Erfindung stellt außerdem ein Computerprogrammprodukt bereit, umfassend ein oder mehrere computerlesbare Medien mit von einem Computer ausführbaren Instruktionen zum Ausführen der Schritte eines der oben beschriebenen Verfahren, wenn diese Instruktionen auf einem Computer ausgeführt werden.

Die Erfindung stellt außerdem eine Vorrichtung zum Übergeben eines Artikels von einer ersten Fördereinrichtung an eine zweite Fördereinrichtung gemäß Anspruch 9 bereit.

Mit anderen Worten ist die Vorrichtung, insbesondere das Regelungselement, derart ausgebildet und/oder konfiguriert, dass sie eines der oben beschriebenen Verfahren durchführen kann.

Das Regelungselement kann insbesondere derart konfiguriert sein, dass es eine selbstadaptierende Regelung durchführt, welche das Anpassen der relativen Positionierung der ersten Fördereinrichtung zur zweiten Fördereinrichtung abhängig von der erfassten Last derart steuert, dass die Last, insbesondere das Drehmoment, des wenigstens einen Motors minimiert oder auf einem Minimum gehalten wird.

Der wenigstens eine Motor kann ein Servomotor sein.

Der Motor, der ersten Fördereinrichtung und/oder der zweiten Fördereinrichtung können eines oder mehrere der oben beschriebenen Merkmale aufweisen.

Die Erfindung stellt außerdem ein System, insbesondere eine Abfüllanlage für die Getränkeindustrie, bereit, umfassend wenigstens zwei Behandlungseinrichtungen zum Behandeln eines Artikels und wenigstens eine oben beschriebene Vorrichtung.

Bei den zwei Behandlungseinrichtungen kann es sich beispielsweise um eine Abfüllmaschine, eine Etikettiervorrichtung, einen Rinser, eine Blasmaschine oder einen Packer handeln.

Die erste Fördereinrichtung kann insbesondere Teil einer ersten Behandlungseinrichtung sein. Die zweite Fördereinrichtung kann ein Transferelement oder ein Element einer zweiten Behandlungseinrichtung sein.

Weitere Merkmale und Vorteile werden nachfolgend anhand der beispielhaften Figuren erläutert. Dabei zeigt
- Fig. 1: eine beispielhafte Vorrichtung zum Übergeben eines Artikels von einer ersten Fördereinrichtung an eine zweite Fördereinrichtung;
- Fig. 2: eine weitere beispielhafte Vorrichtung zum Übergeben eines Artikels von einer ersten Fördereinrichtung an eine zweite Fördereinrichtung; und
- Fig. 3: eine Seitenansicht einer beispielhaften Vorrichtung zum Übergeben eines Artikels von einer ersten Fördereinrichtung an eine zweite Fördereinrichtung.

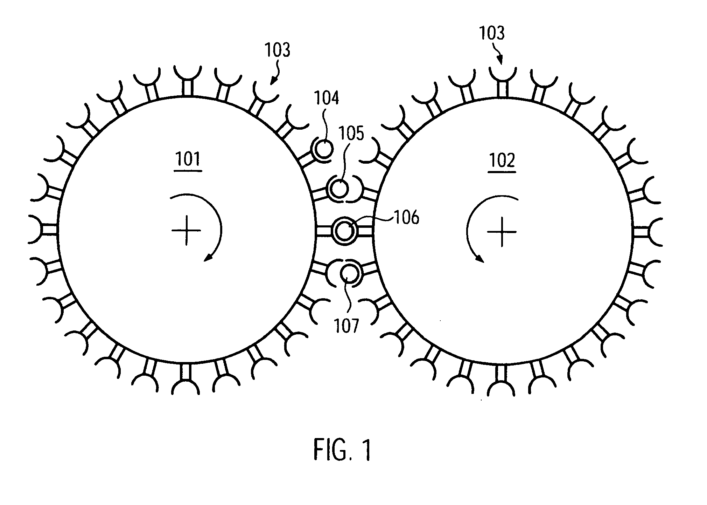

Fig. 1 zeigt eine beispielhafte Vorrichtung zum Übergeben eines Artikels. Im Folgenden wird angenommen, dass es sich bei dem Artikel um eine Flasche, beispielsweise eine Glas- oder Kunststoffflasche, handelt. Es sind jedoch auch beliebige andere Arten von Behältern, beispielsweise Dosen, möglich.

Fig. 1 zeigt insbesondere eine erste Fördereinrichtung 101 und eine zweite Fördereinrichtung 102. Die erste Fördereinrichtung 101 kann beispielsweise ein Ablaufstern einer ersten Behandlungseinrichtung sein während das zweite Fördereinrichtung 102 ein Zulaufstern einer zweiten Behandlungseinrichtung sein kann. Die erste Fördereinrichtung 101 oder die zweite Fördereinrichtung 102 kann auch ein Transferstern sein.

Sowohl die erste Fördereinrichtung 101 als auch die zweite Fördereinrichtung 102 umfassen jeweils eine Mehrzahl von Klammern oder Greifern 103, welche die Flaschen im Bereich der Flaschenmündung und/oder am Flaschenkörper fixieren oder halten können. Die Greifer 103 können beispielsweise als passive (elastische) Greifzangen ausgebildet sein oder als aktive (steuerbare) Greifzangen.

Die erste Fördereinrichtung 101 bewegt sich in diesem Beispiel im Uhrzeigersinn, während die zweite Fördereinrichtung 102 eine Drehung gegen den Uhrzeigersinn ausführt. Der Drehsinn der Fördereinrichtungen ist in Fig. 1 jeweils durch einen Pfeil angedeutet. Die Drehbewegung der gezeigten Fördereinrichtungen wird dabei durch je einen Servomotor angetrieben, welche mit einer Achse der jeweiligen Fördereinrichtung verbunden sind.

In Fig. 1 sind mehrere beispielhafte Flaschen 104, 105, 106 und 107 gezeigt. Die Flaschen 104 und 105 werden von Greifern 103 der ersten Fördereinrichtung 101 fixiert und entlang einer Kreisbahn bewegt. Die Flaschen 104 und 105 befinden sich also vor einer Übergabe an die zweite Fördereinrichtung 102.

Die beispielhafte Flasche 106 befindet sich im Bereich der Übergabe von der ersten Fördereinrichtung 101 an die zweite Fördereinrichtung 102. In diesem Bereich löst der Greifer 103 der ersten Fördereinrichtung 101 die Fixierung der Mündung der Flasche nachdem ein Greifer 103 der zweiten Fördereinrichtung 102 die Mündung der Flasche fixiert hat. Durch die weitere Drehbewegung läuft die Flasche danach aus dem Bereich des Greifers 103 der ersten Fördereinrichtung 101 heraus. Eine solche beispielhafte Flasche nach der Übergabe ist als Flasche 107 in Fig. 1 gezeigt.

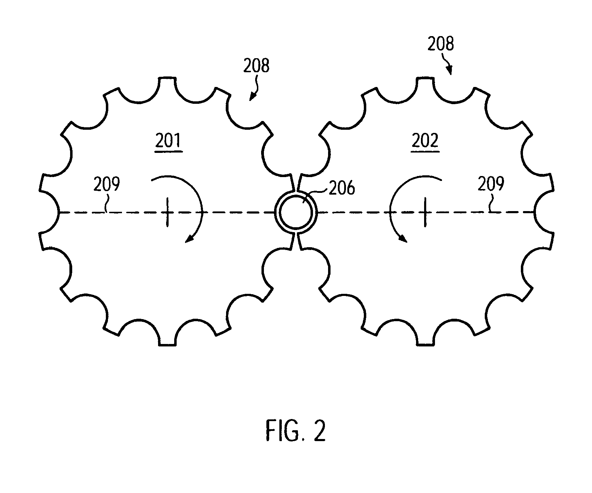

Fig. 2 zeigt eine weitere beispielhafte Vorrichtung. In dieser Vorrichtung sind anstelle von Greifern Ausnehmungen 208 in der ersten Fördereinrichtung 201 beziehungsweise in der zweiten Fördereinrichtung 202 gezeigt. Die erste Fördereinrichtung 201 rotiert wiederum im Uhrzeigersinn, während die zweite Fördereinrichtung 202 gegen den Uhrzeigersinn rotiert. Ein beispielhafter Artikel 206 ist im Bereich der Übergabe von der ersten Fördereinrichtung 201 an die zweite Fördereinrichtung 202 gezeigt.

Sowohl die Vorrichtung in Fig. 1 als auch die beispielhafte Vorrichtung in Fig. 2 umfassen außerdem ein (nicht gezeigtes) Regelungselement. Dieses Regelungselement ist derart ausgebildet, dass es eine Last, insbesondere ein Drehmoment, wenigstens eines Motors der ersten Fördereinrichtung beziehungsweise der zweiten Fördereinrichtung erfasst, und ein Anpassen der relativen Positionierung der ersten Fördereinrichtung zur zweiten Fördereinrichtung abhängig von der erfassten Last steuert.

Mit anderen Worten führt das Regelungselement ein Regelprogramm durch, welches die Übergabe von Artikeln von der ersten Fördereinrichtung an die zweite Fördereinrichtung optimiert. Diese Regelung kann insbesondere eine selbstadaptierende Regelung sein, welche das Drehmoment des wenigstens einen Motors minimiert oder an einem Minimum hält.

Dazu werden Parameterwerte, welche die relative Positionierung der ersten Fördereinrichtung zur zweiten Fördereinrichtung bestimmen, variiert und ein Minimalwert für die Last, insbesondere für das Drehmoment, gesucht. Insbesondere können die vertikale und/oder horizontale Position der ersten und/oder zweiten Fördereinrichtung variiert werden. Die Variationen der Parameterwerte können dabei insbesondere im Zentelmillimeterbereich liegen. Alternativ oder zusätzlich kann ein Winkel bezüglich einer vorherbestimmten Achse, beispielsweise der Achse 209 in der Fig. 2, variiert werden. Die Variationen des Winkels können dabei kleiner als 1° (ein Grad), insbesondere kleiner als 1' (eine Winkelminute), sein.

Durch eine derart angepasste Übergabe können die Artikel sowie das Material der Fördereinrichtungen, beispielsweise die Klammern oder Greifer, geschont werden. Schäden an den Maschinen, welche durch schlecht eingestellte Übergaben verursacht werden, können dadurch wirkungsvoll verhindert oder minimiert werden.

Erfindungsgemäß wird dabei die Erkenntnis ausgenutzt, dass zwischen der relativen Positionierung der Fördereinrichtungen und der Last wenigstens eines Motors von einer der Fördereinrichtungen ein Zusammenhang besteht.

Wenn die Übergabe, insbesondere der Übergabepunkt, von einer Fördereinrichtung an eine zweite Fördereinrichtung ungenau eingestellt ist, kann es zu Verklemmungen der zu übergebenden Artikel und der zum Übergeben genutzten Halteelemente, beispielsweise Klammern, kommen. Dadurch erhöht sich das Drehmoment, das auf die Fördereinrichtungen wirkt, und damit die Last des Motors, also das Drehmoment, das dieser bereitstellen muss.

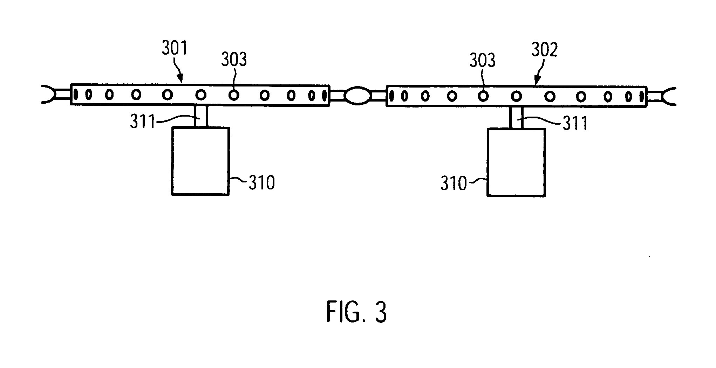

Fig. 3 zeigt eine Seitenansicht einer beispielhaften Vorrichtung zum Übergeben eines Artikels, beispielsweise der beispielhaften Vorrichtung aus Fig. 1.

Insbesondere zeigt Fig. 3 eine erste Fördereinrichtung 301 und eine zweite Fördereinrichtung 302, welche jeweils mehrere Klammern oder Greifer 303 umfassen. An der Zentralachse einer jeden Fördereinrichtung greift ein Servoantrieb 310 über eine Welle 311 an. Dadurch können die Fördereinrichtungen in Rotation gesetzt werden. Servomotoren können das notwendige Drehmoment sehr genau erfassen. Eine Verschlechterung der Übergabe, beispielsweise durch ein Verklemmen der Artikel, führt zu einem Ansteigen des notwendigen Drehmoments. Durch Anpassen der relativen Positionierung der Fördereinrichtungen zueinander, insbesondere durch eine Minimierung des notwendigen Drehmoments, kann die Übergabe optimiert werden.

Die Optimierung kann dabei einmalig in Form eines Optimierungslaufes durchgeführt werden und die ermittelten Parameter können in diesem Fall in eine Parametertabelle übernommen werden. Alternativ oder zusätzlich kann die Regelung auch während der Produktion ständig im Hintergrund laufen und dabei dafür sorgen, dass das Drehmoment auf einem Minimum gehalten wird.

Obwohl in den oben beschriebenen Beispielen die Fördereinrichtungen jeweils nur ein Förderelement, insbesondere einen Transportstern, umfassen, kann jede der Fördereinrichtungen auch mehrere Förderelemente, insbesondere mehrere Transportsterne umfassen.

In diesem Fall kann jedes Förderelement einen Motor, insbesondere einen Servomotor, umfassen. Es kann dann die Last eines oder mehrere Motoren der ersten und/oder zweiten Fördereinrichtung erfasst werden oder eine Gesamtlast mehrere, insbesondere aller, Motoren der ersten und/oder zweiten Fördereinrichtung. Basierend auf der erfassten Last oder Gesamtlast, insbesondere Drehmoment oder Gesamtdrehmoment, kann dann die relative Position wenigstens eines Förderelements der ersten und/oder zweiten Fördereinrichtung angepasst werden, insbesondere derart, dass das Drehmoment oder Gesamtdrehmoment eines oder mehrere Motoren der ersten und/oder zweiten Fördereinrichtung minimiert wird.

## Patentansprüche

1. Verfahren zum Übergeben eines Artikels von einer ersten rotierenden Fördereinrichtung (101; 201; 301) an eine zweite rotierende Fördereinrichtung (102; 202; 302), wobei wenigstens eine Fördereinrichtung wenigstens einen Motor (310) aufweist und wobei die Fördereinrichtungen Halteelemente, wie Greifer, Klammern oder Ausnehmungen, umfassen, das Verfahren umfassend die Schritte:
Erfassen einer Last des wenigstens einen Motors (310); und
Anpassen der relativen Positionierung der ersten Fördereinrichtung (101; 201; 301) zur zweiten Fördereinrichtung (102; 202; 302) abhängig von der erfassten Last;
wobei durch das Anpassen der relativen Positionierung ein Übergabepunkt eingestellt wird;
wobei das Anpassen der relativen Positionierung der ersten und/oder zweiten Fördereinrichtung ein Verändern der Position der ersten und/oder zweiten Fördereinrichtung umfasst, und wobei die Änderung der Position kleiner als ein Teilungsabschnitt ist.

2. Verfahren nach Anspruch 1, wobei das Erfassen der Last ein Bestimmen eines Drehmomentes des wenigstens einen Motors (310) umfasst.

3. Verfahren nach Anspruch 1 oder 2, wobei das Anpassen der relativen Positionierung ein Minimieren der Last des wenigstens einen Motors (310) umfasst.

4. Verfahren nach einem der vorangegangenen Ansprüche, wobei das Anpassen teilweise oder vollständig automatisch durchgeführt wird.

5. Verfahren nach einem der vorangegangenen Ansprüche, wobei der Schritt des Erfassens einer Last kontinuierlich oder in vorherbestimmten zeitlichen Abständen durchgeführt wird.

6. Verfahren nach Anspruch 5, wobei der Schritt des Anpassens nur durchgeführt wird, wenn eine Vergrößerung der Last gegenüber einer zuvor erfassten Last erfasst wird.

7. Verfahren nach einem der vorangegangenen Ansprüche, außerdem umfassend ein Speichern angepasster Parameterwerte der ersten und/oder zweiten Fördereinrichtung (101; 102; 201; 202; 301; 302), die durch das Anpassen der relativen Positionierung erhalten wurden.

8. Computerprogrammprodukt umfassend ein oder mehrere computerlesbare Medien mit von einem Computer ausführbaren Instruktionen zum Ausführen der Schritte eines Verfahrens nach einem der vorangegangenen Ansprüche, wenn diese Instruktionen auf einem Computer ausgeführt werden.

9. Vorrichtung zum Übergeben eines Artikels von einer ersten rotierenden Fördereinrichtung (101; 201; 301) an eine zweite rotierende Fördereinrichtung (102; 202; 302), umfassend:
eine erste und eine zweite rotierbare Fördereinrichtung (101; 102; 201; 202; 301; 302), wobei wenigstens eine Fördereinrichtung (101; 102; 201; 202; 301; 302) wenigstens einen Motor (310) aufweist und wobei die Fördereinrichtungen Halteelemente, wie Greifer, Klammern oder Ausnehmungen, umfassen; und
ein Regelungselement, das derart ausgebildet ist, dass es ein Anpassen der relativen Positionierung der ersten Fördereinrichtung (101; 201; 301) zur zweiten Fördereinrichtung (102; 202; 302) abhängig von einer erfassten Last des wenigstens einen Motors (310) durchführen kann;
wobei durch das Anpassen der relativen Positionierung ein Übergabepunkt eingestellt wird;
wobei das Anpassen der relativen Positionierung der ersten und/oder zweiten Fördereinrichtung ein Verändern der Position der ersten und/oder zweiten Fördereinrichtung umfasst, und **dadurch gekennzeichnet, dass** die Änderung der Position kleiner als ein Teilungsabschnitt ist.

10. Vorrichtung nach Anspruch 9, wobei der wenigstens eine Motor (310) ein Servomotor ist.

11. System, insbesondere eine Abfüllanlage für die Getränkeindustrie, umfassend wenigstens zwei Behandlungseinrichtungen zum Behandeln eines Artikels und wenigstens eine Vorrichtung nach Anspruch 9 oder 10.

## Claims

1. Method for transferring an article from a first rotating conveying device (101; 201; 301) to a second rotating conveying device (102; 202, 302), wherein at least one conveying device comprises at least one motor (310), and wherein the conveying devices comprise holding elements, such as grippers, clamps or recesses, the method comprising the steps:
determining a load of the at least one motor (310); and
adapting the relative positioning of the first conveying device (101; 201; 301) to the second conveying device (102; 202, 302) dependent on the determined load;
wherein by adapting the relative positioning a transfer point is adjusted;
wherein adapting the relative positioning of the first and/or second conveying device comprises altering the position of the first and/or second conveying device, and wherein the alteration in the position is less than one pitch section.

2. Method according to Claim 1, wherein determining the load comprises determining a torque of the at least one motor (310).

3. Method according to Claim 1 or 2, wherein adapting the relative positioning comprises minimising the load of the at least one motor (310).

4. Method according to any one of the preceding claims, wherein adapting the relative positioning is partly or fully carried out automatically.

5. Method according to any one of the preceding claims, wherein the step of determining a load is carried out continuously or in previously determined time intervals.

6. Method according to Claim 5, wherein the adapting step is only carried out if an increase in the load is determined compared to a previously determined load.

7. Method according to any one of the preceding claims, also comprising storing adapted parameter values of the first and/or second conveying device (101; 102; 201; 202; 301; 302) which were obtained by adapting the relative positioning.

8. Computer program product comprising one or more computer-readable media with instructions which can be carried out by a computer for carrying out the steps of a method according to any one of the preceding claims, when these instructions are carried out on a computer.

9. Apparatus for transferring an article from a first rotating conveying device (101; 201; 301) to a second rotating conveying device (102; 202; 302), comprising:
a first and a second rotatable conveying device (101; 102; 201; 202; 301; 302), wherein at least one conveying device (101; 102; 201; 202; 301; 302) comprises at least one motor (310), and wherein the conveying devices comprise holding elements, such as grippers, clamps or recesses; and
a control element which is designed in such a way that it can adapt the relative positioning of the first conveying device (101; 201; 301) to the second conveying device (102; 202; 302) dependent on a determined load of the at least one motor (310);
wherein by adapting the relative positioning a transfer point is adjusted;
wherein adapting the relative positioning of the first and/or second conveying device comprises altering the position of the first and/or second conveying device, and **characterised in that** the alteration in the position is less than one pitch section.

10. Apparatus according to Claim 9, wherein the at least one motor (310) is a servomotor.

11. System, in particular a bottling plant for the beverage industry, comprising at least two treatment devices for treating an article and at least one apparatus according to Claim 9 or 10.

## Revendications

1. Procédé destiné au transfert d'un article d'un premier dispositif de transport rotatif (101; 201; 301) à un deuxième dispositif de transport rotatif (102; 202; 302), au moins un dispositif de transport présentant au moins un moteur (310), et les dispositifs de transport comprenant des éléments de maintien tels que des préhenseurs, des pinces ou des évidements, le procédé comprenant les étapes suivantes :
relevé d'une charge dudit au moins un moteur (310) ; et adaptation du positionnement relatif du premier dispositif de transport (101; 201; 301) par rapport au deuxième dispositif de transport (102; 202; 302) en fonction de la charge relevée ; procédé
d'après lequel, grâce à l'adaptation du positionnement relatif, on règle un point de transfert ;
d'après lequel l'adaptation du positionnement relatif du premier et/ou du deuxième dispositif de transport comprend une modification de la position du premier et/ou du deuxième dispositif de transport, et
d'après lequel la modification de position est inférieure à un pas de division.

2. Procédé selon la revendication 1, d'après lequel le relevé de la charge comprend la détermination d'un couple de rotation dudit au moins un moteur (310).

3. Procédé selon la revendication 1 ou la revendication 2, d'après lequel l'adaptation du positionnement relatif, comprend une minimisation de la charge dudit au moins un moteur (310).

4. Procédé selon l'une des revendications précédentes, d'après lequel l'adaptation est effectuée de manière partiellement ou entièrement automatique.

5. Procédé selon l'une des revendications précédentes, d'après lequel l'étape du relevé d'une charge est effectuée de manière continue ou selon des intervalles de temps prédéterminés.

6. Procédé selon la revendication 5, d'après lequel l'étape de l'adaptation n'est effectuée que lorsque l'on relève une augmentation de la charge par rapport à une charge relevée précédemment.

7. Procédé selon l'une des revendications précédentes, comprenant en outre une mémorisation de valeurs de paramètre adaptées du premier et/ou du deuxième dispositif de transport (101; 102; 201; 202; 301; 302), qui ont été obtenues par l'adaptation du positionnement relatif.

8. Produit de programme d'ordinateur comprenant un ou plusieurs supports lisibles par ordinateur avec des instructions pouvant être exécutées par un ordinateur en vue de l'exécution des étapes d'un procédé selon l'une des revendications précédentes, lorsque ces instructions sont exécutées sur un ordinateur.

9. Dispositif destiné au transfert d'un article d'un premier dispositif de transport rotatif (101; 201; 301) à un deuxième dispositif de transport rotatif (102; 202; 302), comprenant :
un premier et un deuxième dispositif de transport rotatif (101; 102; 201; 202; 301; 302), au moins un dispositif de transport (101; 102; 201; 202; 301; 302) comprenant au moins un moteur (310), et les dispositifs de transport comprenant des éléments de maintien tels que des préhenseurs, des pinces ou des évidements ; et
un élément de régulation qui est conçu de manière à pouvoir effectuer une adaptation du positionnement relatif du premier dispositif de transport (101; 201; 301) par rapport au deuxième dispositif de transport (102; 202; 302), en fonction d'une charge dudit au moins un moteur (310), ayant été relevée ;
dispositif
dans lequel, grâce à l'adaptation du positionnement relatif, on règle un point de transfert ;
dans lequel l'adaptation du positionnement relatif du premier et/ou du deuxième dispositif de transport comprend une modification de la position du premier et/ou du deuxième dispositif de transport, et **caractérisé en ce que** la modification de position est inférieure à un pas de division.

10. Dispositif selon la revendication 9, dans lequel ledit au moins un moteur (310) est un servomoteur.

11. Système, notamment une installation de conditionnement par remplissage pour l'industrie des boissons, comprenant au moins deux installations de traitement pour le traitement d'un article, et au moins un dispositif selon la revendication 9 ou la revendication 10.
